# EUROPEAN PATENT SPECIFICATION

(11) **EP 2 433 345 B1**
(45) Date of publication and mention of the grant of the patent: **12.02.2014**
(21) Application number: 10777427.5
(22) Date of filing: 19.05.2010
(51) Int. Cl.: H02B 7/01, H01F 27/36

(54) **ELECTRICITY DISTRIBUTION STRUCTURE**
STROMVERTEILUNGSSTRUKTUR
STRUCTURE DE DISTRIBUTION D'ÉLECTRICITÉ

(30) Priority: 20.05.2009 FI 20095559
(43) Date of publication of application: 28.03.2012
(73) Proprietor: Rentratek Oy, 48310 Kotka (FI)
(72) Inventor: Peltoniemi, Sakari, 48310 Kotka (FI)
(74) Representative: Papula Oy
(86) International application number: PCT/FI2010/050402
(87) International publication number: WO 2010/133766

(56) References cited:
- EP-A1- 0 049 642
- EP-A1- 1 480 504
- EP-A1- 1 480 504
- WO-A1-00/64020
- WO-A1-00/64020
- WO-A2-98/14040
- WO-A2-2006/076258

## Description

### FIELD OF THE INVENTION

The invention relates to an electricity distribution structure as defined in the preamble of claim 1.

### BACKGROUND OF THE INVENTION

Conventionally, a low voltage transformer, i.e. a transformer by which a voltage of 20kV or 10kV is transformed into a voltage of 380/220 V, is situated in its own space with busbar systems led therefrom to a low voltage switchgear which comprises a group of switches and other components used to provide branchings and cablings to different application sites.

The structure is functional and simple as such but requires space because the transformer, the busbar system and the low voltage switchgear all require their own space and, in addition, one must have access to service them.

New regulations concerning EMC protection also constitute problems in the known structures. Besides safety, reliability and serviceability, faultless operation with other devices is required of an electrical device in its designated operating environment. Interference-free operation is ensured by electromagnetic compatibility (EMC) of devices designed for the same operating environment.

Different interference levels have been defined for residential and industrial environment so that the devices could operate together in a normal manner. All devices in each operating environment can be made compatible with each other if two features are taken into account:
1) none of the devices causes greater interference than a given level,
2) all devices should withstand interference of a given level.

Distribution transformers in both residential buildings and industrial buildings are often situated in the buildings' cellar spaces or ground floors, yet near residential or office spaces. Currents of even thousands of amperes circulate in the transformers and in the outgoing three-phase busbars, causing in the direct vicinity of the transformer strong magnetic fields which, according to new regulations, are not allowed. Therefore, the transformer, the busbar systems and the low voltage switchgears should all be protected by an adequate metal shield. To encapsulate these components separately is a difficult and complicated task. If, on the other hand, the entire electric space is protected by one surrounding metal shield, a large quantity of expensive metal sheet, in general thick aluminum sheet, must be used and, in addition, the service space itself remains unprotected, which causes a health hazard to the service staff.

### OBJECTIVE OF THE INVENTION

The objective of the invention is to eliminate the drawbacks of the prior art referred to above. Especially, the objective of the invention is to disclose a new type of an electricity distribution structure which provides by simple measures a fully protected solution that does not require much space.

### SUMMARY OF THE INVENTION

The electricity distribution structure according to the invention includes a low voltage transformer and, connected thereto, a feed connection on the high voltage side and a distribution busbar system on the low voltage side. According to the invention, the low voltage transformer is surrounded by a substantially solid metal shield which provides the EMC protection. The metal shield surrounds the transformer from the top and the sides and possibly also from below. Further according to the invention, the distribution busbar system is supported on the inner surface of the metal shield by suitable supports and, similarly, supported on the metal shield is a number of switch boxes, their switches being coupled to the distribution busbar system. The switch boxes are open to the transformer so that the switches are disposed in the same airspace between the transformer and the metal shield. Furthermore, the switch boxes are provided on the outside with opening and closing metal hatches so that the metal shield, the switch boxes and the metal hatches form together an impermeable and continuous. EMC protection shield. In addition, a cooling air circulation is provided inside the metal shield for cooling the transformer and the switches.

The metal shield is located as close to the transformer as possible, i.e. for example at a distance of approximately 10 to 20cm. The distance is determined only by the spaces needed by the busbar systems and by the switches to be attached to the metal shield, and by adequate safety distances according to electrical safety regulations.

Preferably, the distribution busbar system supported on the metal shield is connected to the transformer flexibly and not by fixed busbars. This way, the vibrations of the transformer are not able to transfer to the distribution busbar system and therefrom to the metal shield, which would both stress the structures and be heard as an unpleasant sound.

Preferably, the switch boxes constitute an integral metal structure with the metal shield. For example, openings are made on the metal shield for the switch boxes which are thereafter welded at the edges. The metal shield is suitably made from approximately 5mm thick aluminum sheet which constitutes a good EMC protection, a supporting frame for the components to be attached thereto, and allows easy attachment of the components by welding. Naturally, also other metal sheets can be considered.
The switch box can be located completely outside the plane determined by the metal shield. Similarly, the switch box can be built partially inside the plane determined by the metal shield, or the switch box can be located completely inside the plane determined by the metal shield, in which case its opening cover is flush with the metal shield. It is essential that the switch box does not comprise any open gaps which would weaken the EMC protection constituted by the metal shield.

Although a metal shield which is bare on both sides is relatively good in conducting heat from the transformer, it is not, however, normally sufficient, because the ideal temperature of the transformer and the switches is approximately 20°C. On the other hand, completely free air flows and blows around the transformer and the switches are not possible because of impurities in the air. Therefore, the cooling air circulation preferably includes a closed air circulation internal of the metal shield and a heat exchanger for conveying the heat out of the metal shield.

Furthermore, the structure suitably includes an air feed provided with an air filter for maintaining an overpressure inside the metal shield. This way, only clean new air is blown inside the metal shield, and because a small overpressure is always kept therein, impurities are not able to flow in even from small gaps or during opening of the hatches.

In addition, a halon extinguishing system provided with an electric arc guard or other equivalent system by which a fire due to a possible electric arc.can be quickly extinguished can be used in the structure according to the invention. Similarly, a pressure discharge hatch which constitutes a substantially integral EMC protection shield with the metal shield can be provided on the metal shield, preferably at the top thereof, i.e. the ceiling. The hatch is closed in normal conditions and is disposed to be in contact with the metal shield, but, due to abrupt internal rising of pressure, it is easily able to open, releasing out the pressure developing inside the metal shield.

The electricity distribution structure according to the invention provides considerable advantages as compared with the prior art. Considerable saving of space is achieved by the invention in comparison with the prior art. Furthermore, the EMC protection is easy and simple to implement efficiently and safely, also in consideration of the service of the transformer. All electrical components are provided in a closed and clean space in which the optimum temperature is obtained. Thanks to these features, the lifetime of the devices becomes longer and the devices can be momentarily loaded even with currents which are substantially higher than the nominal values. This provides an important economic benefit in different fault and service situations as the dimensioning can be reduced. For example, in using more than one transformer, three transformers of equal capacity according to the current technology can, in general, be replaced with two equivalent transformers.

The structure is also very flexible as the consumption and the consumption sites increase, because a required amount of switches can be easily retrofitted on the metal shield. Also, adding busbar systems on the inner surface of the shield is equally easy, and in either case the need for space is not increased. An EMC protected distribution busbar or a suitable cable can also be easily connected to the switches, always according to regulations. The EMC protected distribution busbar comprises one or more current-collecting boxes. The current-collecting boxes can also be expanded to form main switchgears such as switchgears for each floor in apartment houses. Distribution of current to each apartment or each application from this switchgear may then be carried out by cables.

The invention also provides the production of merely a very small and compact low voltage switchgear by leaving the transformer outside the metal shield and by making an otherwise equivalent structure, the distribution busbars of which are suitably fed from the transformer by cables or busbars.

### LIST OF FIGURES

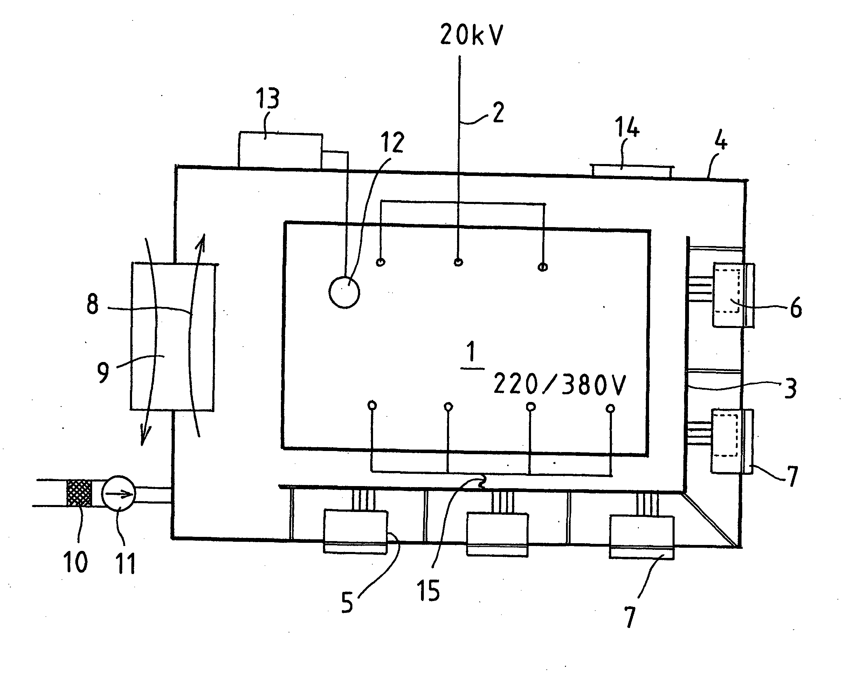

In the following, the invention will be described in detail with reference to the accompanying drawing which schematically represents one structure according to the invention.

### DETAILED DESCRIPTION OF THE INVENTION

The structure schematically presented by the figure as seen from the top includes a low voltage transformer 1 surrounded at least from the top and all four sides by a metal shield 4, i.e. for example a 5mm thick aluminum sheet. This way, a closed airspace is formed between the transformer and the metal shield. Located in this airspace, attached to the inner surface of the aluminum sheet, is a distribution busbar system 3, i.e. three phases and a neutral busbar at an adequate distance from each other. This busbar system is connected to the low voltage side of the transformer by a flexible coupling 15, i.e. a coupling which does not convey the vibrations of the transformer to the busbar system and therefrom to the metal shield 3. A high voltage feed connection 2 is coupled to the high voltage side of the transformer, its voltage being for example 20 or 10kV.

In this embodiment, attached to the metal shield 4 are five switch boxes 5 welded in openings made on the shield so that the shield and the boxes constitute a solid and continuous structure. Inside the switch boxes there are switches 6, preferably withdrawable switches, which are coupled to the distribution busbar system 3. The switch boxes 5 are so built on the metal shield 4 that only their opening and closing metal hatch 7 remains outside the level of the surface of the shield 4. The hatches can be closed tightly and securely so that the EMC protection is not able to leak through them. However, the switch boxes 5 are open on the inside, i.e. they share the airspace with the airspace between the transformer 1 and the metal shield 4. This way, the air circulation 8 and cooling of the transformer cools at the same time the switches and keeps them at the same low temperature. In connection with the air circulation 8 there is also a heat exchanger 9 by which air is circulated in the closed circulation between the transformer 1 and the shield 4, and, at the same time, the heat exchanger 9 conveys the excess heat to the external airspace.

Such a closed structure has many good properties. The transformer 1 and the switches 6 remain always clean because they are disposed in a clean closed air circulation wherein impurities of the outside air are not able to penetrate. Furthermore, thanks to the cooling and the regular operating temperature, the lifetime of the electrical components becomes longer which provides considerable savings. Also, as the dependability and durability of the parts increase, they can be safely overloaded according to momentary needs, for example during service operations.

In order to secure the cleanliness of the cooling air circulation and to prevent the access of impurities therein, the shield 4 is connected to a blower 11 provided with an air filter 10 by which a small overpressure is always kept in the space between the shield and the transformer. Hence, all possible flows of impurities to the electrical devices are prevented. This way, the need for service of the electrical devices is also substantially reduced.

Furthermore, an electric arc guard 12 and a halon extinguishing system 13 connected thereto are coupled to the structure as safety-increasing components, in which case, when an electric arc develops, the system 13 fills the metal shield internal space with flame suppressing gas. In the same way, safety is increased by a pressure discharge hatch 14 attached to the shield, formed by a loosely secured sheet so that, as the pressure increases inside the metal sheet, it opens easily. A horizontal hatch may rest in its place merely by its own weight and a vertical hatch may be for example lightly spring-loaded. It is essential in this hatch as well that in its normal position it constitutes with the shield a continuous EMC protection. Thus, the hatch 14 is suitably made from the same material, aluminum sheet, as the shield 4.

The invention is not limited merely to the examples referred to above; instead, many variations are possible within the scope of the inventive idea defined by the claims.

## Claims

1. An electricity distribution structure including a low voltage transformer (1) and, connected thereto, a feed connection (2) on the high voltage side and a distribution busbar system (3) on the low voltage side, **characterized in that** the low voltage transformer (1) is surrounded by a substantially solid metal shield (4) which provides the EMC protection; the distribution busbar system (3) is supported on the inner surface of the metal shield; supported on the metal shield is a number of switch boxes (5), their switches (6) being coupled to the distribution busbar system, the switch boxes being open to the transformer and provided on the outside with opening and closing metal hatches (7); and that inside the metal shield there is a cooling air circulation (8) for cooling the transformer and the switches.

2. The electricity distribution structure according to claim 1, **characterized in that** the switch boxes (5) constitute an integral metal structure with the metal shield (4).

3. The electricity distribution structure according to claim 1 or 2, **characterized in that** the metal shield (4) is an approximately 5mm thick aluminum sheet.

4. The electricity distribution structure according to any one of claims 1 to 3, **characterized in that** a switch box (5) is located outside the plane determined by the metal shield (4).

5. The electricity distribution structure according to any one of claims 1 to 3, **characterized in that** the switch box (5) is built partially inside the plane determined by the metal shield (4).

6. The electricity distribution structure according to any one of claims 1 to 3, **characterized in that** a switch box (5) is located substantially inside the plane determined by the metal shield (4).

7. The electricity distribution structure according to any one of claims 1 to 6, **characterized in that** the cooling air circulation (8) includes a closed air circulation internal of the metal shield (4) and a heat exchanger (9) for conveying the heat from the metal shield.

8. The electricity distribution structure according to any one of claims 1 to 7, **characterized in that** the structure includes an air feed (11) provided with an air filter (10) for maintaining an overpressure inside the metal shield (4).

9. The electricity distribution structure according to any one of claims 1 to 8, **characterized in that** the structure includes a halon extinguishing system (13) provided with an electric arc guard (12).

10. The electricity distribution structure according to any one of claims 1 to 9, **characterized in that** the metal shield (4), preferably its top, i.e. the ceiling, includes a pressure discharge hatch (14) which constitutes a substantially integral EMC protection shield with the metal shield.

## Patentansprüche

1. Stromverteilungsstruktur enthaltend einen Niederspannungswandler (1) und damit verbunden eine Versorgungsverbindung (2) auf der Hochspannungsseite und ein Verteilerleistensystem (3) auf der Niederspannungsseite, **dadurch gekennzeichnet, dass** der Niederspannungswandler (1) von einem im Wesentlichen massiven Metallschild (4) umgeben ist, das den EMC-Schutz vorsieht; das Verteilerleistensystem (3) auf der Innenfläche des Metallschilds gehalten ist; auf dem Metallschild etliche Schaltkästen (5) gehalten sind, deren Schalter (6) mit dem Verteilerleistensystem (3) verbunden sind, wobei die Schaltkästen zu dem Wandler geöffnet sind und auf der Außenseite mit metallischen Öffnungs- und Schließklappen (7) versehen sind; und dass im Inneren des Metallschilds ein Kühlungsluftkreislauf (8) zum Kühlen des Wandlers und der Schalter vorhanden ist.

2. Stromverteilungsstruktur nach Anspruch 1, **dadurch gekennzeichnet, dass** die Schaltkästen (5) eine integrale Metallstruktur mit dem Metallschild (4) bilden.

3. Stromverteilungsstruktur nach Anspruch 1 oder 2, **dadurch gekennzeichnet, dass** das Metallschild (4) ein ungefähr 5mm dickes Aluminiumblech ist.

4. Stromverteilungsstruktur nach einem der Ansprüche 1 bis 3, **dadurch gekennzeichnet, dass** ein Schaltkasten (5) außerhalb der Ebene angeordnet ist, die von dem Metallschild (4) festgelegt wird.

5. Stromverteilungsstruktur nach einem der Ansprüche 1 bis 3, **dadurch gekennzeichnet, dass** der Schaltkasten (5) teilweise innerhalb der Ebene ausgebildet ist, die von dem Metallschild (4) festgelegt wird.

6. Stromverteilungsstruktur nach einem der Ansprüche 1 bis 3, **dadurch gekennzeichnet, dass** ein Schaltkasten (5) im Wesentlichen innerhalb der Ebene angeordnet ist, die von dem Metallschild (4) festgelegt wird.

7. Stromverteilungsstruktur nach einem der Ansprüche 1 bis 6, **dadurch gekennzeichnet, dass** der Kühlungsluftkreislauf (8) einen geschlossenen Luftkreislauf, der innen in dem Metallschild (4) angeordnet ist, und einen Wärmetauscher (9) zum Abführen der Wärme von dem Metallschild aufweist.

8. Stromverteilungsstruktur nach einem der Ansprüche 1 bis 7, **dadurch gekennzeichnet, dass** die Struktur eine Luftzuführung (11) aufweist, die mit einem Luftfilter (10) zum Aufrechterhalten eines Überdrucks im Inneren des Metallschilds (4) versehen ist.

9. Stromverteilungsstruktur nach einem der Ansprüche 1 bis 8, **dadurch gekennzeichnet, dass** die Struktur ein Halonlöschsystem (13) aufweist, das mit einem Lichtbogenschutz (12) versehen ist.

10. Stromverteilungsstruktur nach einem der Ansprüche 1 bis 9, **dadurch gekennzeichnet, dass** das Metallschild (4), bevorzugter Weise sein oberer Teil, d.h. die Decke, eine Druckverteilungsklappe (14) aufweist, die ein im Wesentlichen integrales EMC-Schutzschild mit dem Metallschild bildet.

## Revendications

1. Structure de distribution d'électricité comprenant un transformateur basse tension (1) et, connectés à celui-ci, une connexion d'alimentation (2) sur le côté haute tension et un système de barres de distribution (3) sur le côté basse tension, **caractérisée en ce que** le transformateur basse tension (1) est entouré par un blindage métallique sensiblement solide (4) qui fournit la protection CEM ; le système de barres de distribution (3) est supporté sur la surface intérieure du blindage métallique ; une pluralité de boîtiers de commutation (5) est supportée sur le blindage métallique, leurs commutateurs (6) étant couplés au système de barres de distribution, les boîtiers de commutation étant ouverts vers le transformateur et munis sur l'extérieur de trappes métalliques d'ouverture et de fermeture (7) ; et **en ce qu'**il y a à l'intérieur du blindage métallique une circulation d'air de refroidissement (8) pour refroidir le transformateur et les commutateurs.

2. Structure de distribution d'électricité selon la revendication 1, **caractérisée en ce que** les boîtiers de commutation (5) constituent une structure métallique intégrale avec le blindage métallique (4).

3. Structure de distribution d'électricité selon la revendication 1 ou 2, **caractérisée en ce que** le blindage métallique (4) est une tôle d'aluminium d'environ 5 mm d'épaisseur.

4. Structure de distribution d'électricité selon l'une quelconque des revendications 1 à 3, **caractérisée en ce qu'**un boîtier de commutation (5) est situé à l'extérieur du plan déterminé par le blindage métallique (4).

5. Structure de distribution d'électricité selon l'une quelconque des revendications 1 à 3, **caractérisée en ce que** le boîtier de commutation (5) est construit partiellement à l'intérieur du plan déterminé par le blindage métallique (4).

6. Structure de distribution d'électricité selon l'une quelconque des revendications 1 à 3, **caractérisée en ce qu'**un boîtier de commutation (5) est situé sensiblement à l'intérieur du plan déterminé par le blindage métallique (4).

7. Structure de distribution d'électricité selon l'une quelconque des revendications 1 à 6, **caractérisée en ce que** la circulation d'air de refroidissement (8) comprend une circulation d'air fermée à l'intérieur du blindage métallique (4) et un échangeur de chaleur (9) pour évacuer la chaleur du blindage métallique.

8. Structure de distribution d'électricité selon l'une quelconque des revendications 1 à 7, **caractérisée en ce que** la structure comprend une alimentation d'air (11) munie d'un filtre à air (10) pour maintenir une surpression à l'intérieur du blindage métallique (4).

9. Structure de distribution d'électricité selon l'une quelconque des revendications 1 à 8, **caractérisée en ce que** la structure comprend un système d'extinction au halon (13) muni d'une protection contre l'arc électrique (12).

10. Structure de distribution d'électricité selon l'une quelconque des revendications 1 à 9, **caractérisée en ce que** le blindage métallique (4), de préférence son dessus, c'est-à-dire le plafond, comprend une trappe de décharge de pression (14) qui constitue un écran de protection CEM sensiblement intégral avec le blindage métallique.
